(19) Europäisches Patentamt
European Patent Office
Office européen des brevets

(11) Veröffentlichungsnummer: **0 224 759**
**A2**

(12) # EUROPÄISCHE PATENTANMELDUNG

(21) Anmeldenummer: 86115595.0

(22) Anmeldetag: 11.11.86

(51) Int. Cl.⁴: C 08 F 4/06
C 08 F 2/38

(30) Priorität: 23.11.85 DE 3541408

(43) Veröffentlichungstag der Anmeldung:
10.06.87 Patentblatt 87/24

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Musch, Rüdiger, Dr.
Altenberger Domstrasse 169
D-5060 Bergisch Gladbach 2(DE)

(72) Erfinder: Mottweiler, Renke, Dr.
Carl-Rumpff-Strasse 47
D-5090 Leverkusen(DE)

(72) Erfinder: Nerger, Dittmar, Dr.
Bacherhofstrasse 74
D-4150 Krefeld(DE)

(54) **Herstellung von Polymeren durch kationische Polymerisation.**

(57) Die Herstellung von Polymeren mit Halogenendgruppen aus kationisch polymerisierbaren Monomeren mit Hilfe eines Katalysatorsystems aus einem Metallhalogenid und einem organischen Halogenid, wobei pro Mol Monomer $10^{-1}$ bis $10^{-6}$ Mol Metallhalogenid anwesend sind und das Metallhalogenid im 2- bis 100-fachen molaren Überschuß gegenüber dem organischen Halogenid eingesetzt wird, in Gegenwart eines unter Reaktionsbedingungen inerten Lösungsmittels bei +10°C bis −130°C, führt dann zu Polymeren mit enger Molgewichtsverteilung und hohem Funktionalitätsgrad, wenn pro Mol Metallhalogenid $10^{-1}$ bis $10^{-4}$ Mol Waser anwesend sind.

EP 0 224 759 A2

0224759

BAYER AKTIENGESELLSCHAFT
Konzernverwaltung RP
Patentabteilung

5090 Leverkusen, Bayerwerk

Jo/cm/c

# Herstellung von Polymeren durch kationische Polymerisation

Die Anmeldung betrifft ein Verfahren zur Herstellung von makromolekularen Stoffen mit endständigen reaktiven Gruppen durch kationische Polymerisation von kationisch polymerisierbaren Monomeren in Gegenwart von Metallhalogeniden, bestimmten Halogenkohlenwasserstoffen und Wasser.

Ein Reaktionssystem, das durch kationische Polymerisation Produkte mit zwei reaktiven Endgruppen, sogenannte Telechele, liefert, wird von J.P. Kennedy in J. Polym. Sci., Polymer Chem. Ed 18, 1523 (1980) beschrieben. Solche Makromoleküle mit definierten Endgruppen sind ausgezeichnete Präpolymere für die Herstellung von z.B. maßgeschneiderten Copolymeren mit bekannter, einstellbarer Blocklänge.

Bei dieser sogenannten Inifer-Methode werden große Anstrengungen unternommen, die Raktionskomponenten und die Reaktionsgefäße zu trocknen, um zu reproduzierbaren Ergebnissen zu gelangen. Bei der Übertragung des Verfahrens auf den großtechnischen Maßstab wurde gefunden, daß die Reaktion sehr langsam ablief und schon bei niedrigen Monomerumsätzen stehen blieb.

Der Erfindung liegt daher die Aufgabe zugrunde, ein wirtschaftliches Verfahren zur Herstellung von Telechelen aufzufinden, ohne daß die oben genannten Nachteile auftreten. Weiterhin ist Aufgabe der Erfindung, Polymere mit enger Molekulargewichtsverteilung und hohem Funktionalitätsgrad nach wirtschaftlich einfacher und sicherer Verfahrensweise herzustellen.

Diese Aufgabe wird erfindungsgemäß dadurch gelöst, daß man das Monomere, eine bestimmte Menge Wasser, den Halogenkohlenwasserstoff und das Metallhalogenid in einem inerten Lösungsmittel oder Lösungsmittelgemisch löst und in eine Polymerisationsapparatur eindosiert. Die Polymerisation läuft deutlich schneller, wobei Monomerumsätze von nahezu 100 % erreicht wurden. Das erfindungsgemäße Katalysatorsystem eignet sich daher bestens für die Polymerisation in kontinuiertlich arbeitenden Reaktoren. Solche Reaktoren werden z.B. in der Monographie von H. Güterbock, Polyisobutylen und Isobuylen-Mischpolymerisate, Springer Verlag 1959 beschrieben.

Gegenstand der Erfindung ist daher ein Verfahren zur Herstellung von Polymeren mit Halogenendgruppen aus kationisch polymerisierbaren Monomeren mit Hilfe eines Katalysatorsystems aus einem Metallhalogenid und einem organischen Halogenid der allgemeinen Formel

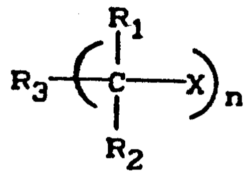

wobei

X ein Halogenatom,

n eine Zahl von 1 bis 4,

$R_1$, $R_2$ $C_5$-$C_{10}$-Cycloalkyl oder geradkettiges oder verzweigtes $C_1$-$C_{20}$-Alkyl und

$R_3$ $C_5$-$C_{10}$-Cycloalkyl oder- Cycloalkylen, $C_1$-$C_{20}$-Alkyl oder -Alkylen, Aryl oder Arylen bedeuten

und das organische Halogenid 5 bis 50 C-Atome besitzt, wobei pro Mol Monomer $10^{-1}$ bis $10^{-6}$ Mol Metallhalogenid anwesend sind und das Metallhalogeind im 2- bis 100-fachen molaren Überschuß gegenüber dem organischen Halogenid eingesetzt wird, in Gegenwart eines unter Reaktionsbedingungen inerten Lösungsmittels bei +10° C bis -130° C, das dadurch gekennzeichnet ist, daß pro Mol Metallhalogenid $10^{-1}$ bis $10^{-4}$ Mol Wasser anwesend sind.

Als Monomere kommen für das erfindungsgemäße Verfahren kationisch polymerisierbare Monomere vom Typ 1-Buten, 2-Methylbuten, 4-Methyl-1-penten oder Vinylcyclohexan in Frage, wie sie in der Monographie: "Cationic polymerization of olefins" von J.P. Kennedy, J. Wiley u. Sons, New York in Tab. 1, Abschnitt 1a-d, 39-41 beschrieben worden sind, also auch Vinylether, z.B. Isobutylvinylether. Bevorzugtes Monomer ist Isobuten.

Als Katalysatoren werden Metallhalogenide vom Typ der Lewis-Säuren wie $BX_3$, $SnX_4$, $TiX_4$, $SbX_5$ oder $FeX_3$ eingesetzt, wobei X Fluor, Chlor, Brom oder Jod bedeutet. Borhalogenide sind bevorzugt,wobei $BCl_3$ besonders geeignet ist.

Das Wasser wird üblicherweise in Lösungsmittel gelöst zudosiert, wobei die Konzentration bevorzugt $10^{-2}$ bis $10^{-3}$ Mol beträgt.

Bevorzugt sind solche organischen Halogenide, die an den C-Atomen α-ständig zu den Halogenatomen keine Wasserstoffatome und an den β-ständigen C-Atomen keine oder wenigstens 2 Wasserstoffatome tragen.

Besonders bevorzugt sind 2,5-Dichlor-2,5-dimethylhexan, 9,14-Dichlor-9,14-di-n-heptyl-docosan, 2,5,8-Trichlor-2,5,8-trimethylnonan, 2-Chlor-2,3,3-trimethylbutan, 2-Chlor-2,4,4,6,6-pentamethylheptan, 2-Chlor-2-methylethylbenzol, p-Di-(α,α-dimethyl-chloromethyl)benzol; 1,3,5-Tri-α,α-dimethylchloromethyl)benzol.

Man polymerisiert vorzugsweise bei 0 bis -60°C in niedrigsiedenden Lösungsmitteln. Als geeignete Lösungsmittel kommen z.B. gesättigte Kohlenwasserstoffe wie Ethan, Propan, Butan, Pentan oder Hexan sowie Chlorkohlenwasserstoffe wie Methylchlorid oder Methylenchlorid oder Mischungen davon in Betracht.

## Beispiele

A. Herstellung der aromatischen Halogenverbindungen

p-Di-(α,α-dimethyl-chloromethyl)benzol (Dicumylchlorid)

Die Herstellung erfolgte nach der Vorschrift von J.P. Kennedy und R.A. Smith, J. Polymer Sci., Polym. Chem. Ed 18, 1523-37 (1980).

1,3,5 (α,α-dimethyl-chlormethyl)benzol (Tricumylchlorid)

Die Herstellung erfolgte nach der Vorschrift von J.P. Kennedy et al, Polymer Bull. 4, 67 (1981).

B. Herstellung der aliphatischen Halogenverbindung

2,5-Dichlor-2,5-dimethylhexan

2,5-Dimethyl-1,5-hexadien wurde in 150 ml $CH_2Cl_2$ gelöst auf -30°C abgekühlt und mit einer Mischung von 20 ml Thionylchlorid und 10 ml $H_2O$ tropfenweise versetzt. Danach erwärmte man die Mischung auf 0°C und wusch sie nach 2,5 Stunden mit kalter 1 gew.-% wäßriger $K_2CO_3$-Lösung, danach mit eiskaltem Wasser. Das Produkt wurde über $MgSO_4$ getrocknet und destilliert. Ausbeute 81 %, Schmp.: 64°C.

## Durchführung der Polymerisationen

### C. Polymerisation unter Ausschluß von Wasser (Vergleichsversuch)

Experimentelle Bedingungen

| | |
|---|---|
| Initator | $2{,}3 \cdot 10^{-3}$ mol |
| Isobuten | 0,12 mol |
| Lösungsmittel : $CH_3Cl$ | 90 ml |
| Hexan | 10 ml |
| Reaktionstemperatur | -40°C |
| Reaktionszeit | 120 Minuten |
| $BCl_3$ | 0,025 mol |

Die Polymerisation erfolgte in einer Hochvakuum-Apparatur, die 3-mal bei 300°C unter Vakuum ($10^{-1}$ bis $10^{-4}$ Pa) ausgeheizt wurde, um Feuchtigkeitsspuren zu entfernen. $BCl_3$ wurde 4-mal entgast, über Aktivkohle geleitet und bis zum Einsatz unter dem eigenen Dampfdruck gelagert. Isbutylen wurde 8-mal durch Na-Dampf destilliert, die Lösungsmittel über $CaH_2$ aufbewahrt und davon 3-mal fraktioniert destilliert. Der Initiator wurde in Methylchlorid gelöst und durch Flüssigextraktion getrocknet. Die Polymerisation wurde durchgeführt, indem man Isobuten und den Coinitiator in Methylchlorid und Hexan löste, die Mischung auf die gewünschte Temperatur abkühlte und $BCl_3$ zugab.

Nach einer Reaktionszeit von 120 Minuten erhielt man

lediglich ein niedermolekulares Produkt mit breiter Molekulargewichtsverteilung in einer Ausbeute von 12 %.

D. Polymerisation in Gegenwart von Wasser

Man verfuhr wie in Beispiel C, nur setzte man an Stelle des trockenen Hexans ein "Feuchthexan" ein, das 20 ppm $H_2O$ enthielt. Die Polymerisation erfolgte unmittelbar nach Zugabe von $BCl_3$ und war nach wenigen Minuten beendet. Man erhielt ein Produkt mit einem Molekulargewicht von 3100 einer Funktionalität von 1,85 ± 0,2 in einer Ausbeute von 96 %.

E. Polymerisation im technischen Maßstab

Experimentelle Bedingungen:

| | |
|---|---|
| $BCl_3$ | 3-12,5 mol |
| $H_2O$ | 0-3,7 · $10^{-2}$ mol |
| Initiator | 0,4-1,6 mol |
| Isobuten | 125 mol |
| Lösungsmittel $CH_3Cl$ | 52 kg |
| Lösungsmittel Hexan | 12 kg |
| Reaktionstemperatur | -40° C |
| Reaktionszeit | 30 min |

Die Polymerisation wurde in einem 120 l Rührwerksbehälter durchgeführt, der vorher durch Aufheizen, Spülen mit

0224759

trockenem Stickstoff und mit wasserfreiem Lösungsmittel sorgfältig getrocknet worden war. Monomer und Lösungsmittel wurden vor dem Einsatz durch Destillation azeotrop entwässert und zusätzlich über Zeolith getrocknet. $BCl_3$ und der Initiator wie in Beispiel C beschrieben, vorbehandelt. Die gesamte Reaktionsapparatur (Reaktionskessel und Dosiergefäße) wurden während der Polymerisation mit Stickstoff überlagert und inertisiert.

Über die Meßgeräte wurden Hexan, Iniferlösung, Methylchlorid und Monomer in den Kessel eindosiert und 30 Minuten temperiert. Bei Erreichen der Reaktionstemperatur wurde die Polymersiation durch Zusatz von $BCl_3$ als 20 gew.-%ige Lösung in Hexan gestartet. Bei der Polymerisation in Gegenwart von Wasser wurde Feuchthexan mit einem $H_2O$-Gehalt von 90 ppm anteilmäßig im Kessel vorgelegt.

Die Ergebnisse sind in der folgenden Tabelle zusammengefaßt worden:

Tabelle

| Beispiel (E) | Initiator-Typ | Menge (g) | $BCl_3$ (g) | $H_2O$ (mg) | Monomer-Umsatz (%) | DPn/DPth |
|---|---|---|---|---|---|---|
| 1 1) | A | 90 | 360 | 0 | 11 | 0,6 |
| 2 | A | 90 | 360 | 110 | 64 | 0,95 |
| 3 | A | 90 | 360 | 332 | 96 | 1,0 |
| 4 | A | 90 | 360 | 664 | 41 | 1,05 |
| 5 1) | A | 360 | 1440 | 0 | 15 | 0,7 |
| 6 | A | 360 | 1440 | 120 | 94 | 1,0 |
| 7 1) | B | 270 | 540 | 0 | 16 | 0,7 |
| 8 | B | 270 | 540 | 110 | 50 | 1,05 |
| 9 | B | 270 | 540 | 332 | 89 | 1,0 |
| 10 1) | C | 280 | 1400 | 0 | 7 | 0,4 |
| 11 | C | 280 | 1400 | 80 | 95 | 1,0 |

1) Vergleichsversuche

Wie die Beispiele zeigen, erhöht sich der Monomerumsatz durch das erfindungsgemäße Katalysatorsystem (Beispiele 2-4, 6, 8, 9, 11) deutlich gegenüber der bisherigen Fahrweise. (Beispiele 1, 5, 7, 10), wobei ein zu hoher $H_2O$-Ge-

halt, bezogen auf $BCl_3$ (Beispiel 4) die Reaktivität des Katalysators wieder bremst.

Die Bestimmung des mittleren Polymerisationsgrades DPn erfolgte mit Hilfe der GPC. Es wurde ein Du Pont 830 HPLC-Gerät verwendet mit der Säulenordnung 500 Å, $10^4$ Å und $10^6$ Å sowie THF als Laufmittel. Als Eichsubstanzen wurden Polystyrol-Standards eingesetzt. Bei einer störungsfreien Polymerisation soll der so ermittelte Polymerisationsgrad DPn dem theoretischen Wert Dpth entsprechen und die Beziehung DPn/DPth = 1 sein.

Die Funktionalität der Telechele wurde durch 1H-NMR-Messungen ermittelt, indem man die Intensitäten der Resonanzsignale aromatischer Protonen (I) mit den endständigen aliphatischen Protonen (II) verglich.

Sie sollte bei einer Funktionalität von 2 im Verhältnis I:II = bei 0,33 liegen.

Die Funktionalität der durch aliphatische Halogenverbindungen gestarteten Telechele, bei denen also aromatische Protonen fehlen, wurde aus dem Intensitätsverhältnis endständiger Methylprotonen II, den Methylenprotonen III und dem Molekulargewicht $M_n$(GPC) ermittelt.

## Patentansprüche

1. Verfahren zur Herstellung von Polymeren mit Halogenendgruppen aus kationisch polymerisierbaren Monomeren mit Hilfe eines Katalysatorsystems aus einem Metallhalogenid und einem organischen Halogenid der allgemeinen Formel

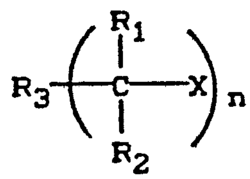

wobei

X ein Halogenatom,

n eine Zahl von 1 bis 4,

$R_1$, $R_2$ $C_5$-$C_{10}$-Cycloalkyl oder geradkettiges oder verzweigtes $C_1$-$C_{20}$-Alkyl und

$R_3$ $C_5$-$C_{10}$-Cycloalkyl oder -Cycloalkylen, $C_1$-$C_{20}$-Alkyl oder -Alkylen, Aryl oder Arylen bedeuten

und das organische Halogenid 5 bis 50 C-Atome besitzt,

wobei pro Mol Monomer $10^{-1}$ bis $10^{-6}$ Mol Metallhalogenid anwesend sind und das Metallhalogenid im 2- bis 100-fachen molaren Überschuß gegenüber dem organischen Halogenid eingesetzt wird, in Gegenwart

eines unter Reaktionsbedingungen inerten Lösungsmittels bei +10°C bis -130°C, das dadurch gekennzeichnet ist, daß pro Mol Metallhalogenid $10^{-1}$ bis $10^{-4}$ Mol Wasser anwesend sind.

2. Verfahren gemäß Anspruch 1, dadurch gekennzeichnet, daß man Isobutylen als Monomer einsetzt.

3. Verfahren gemäß Anspruch 1, dadurch gekennzeichnet, daß man als Metallhalogenid $BCl_3$ einsetzt.

4. Verfahren gemäß Anspruch 1, dadurch gekennzeichnet, daß man bei Temperaturen von -10 bis -60°C arbeitet.

5. Verfahren gemäß 1, dadurch gekennzeichnet, daß man Dicumyl- und Tricumylchlorid als organisches Halogenid einsetzt.

6. Verfahren gemäß Anspruch 1, dadurch gekennzeichnet, daß man aliphatische Halogenide als organisches Halogenid einsetzt.

7. Verfahren gemäß Anspruch 1, dadurch gekennzeichnet, daß man $1 \cdot 10^{-2}$ bis $1 \cdot 10^{-3}$ Mol $H_2O$ pro Mol $BCl_3$ einsetzt.